# EUROPEAN PATENT SPECIFICATION

(11) **EP 3 635 042 B1**
(45) Date of publication and mention of the grant of the patent: **02.03.2022**
(21) Application number: 17739730.4
(22) Date of filing: 06.06.2017
(51) Int. Cl.: C08J 7/04, C09D 131/04, C09J 131/04, B29C 37/00, B29C 44/12, B29C 67/24

(54) **PROCESS TO MAKE A COMPOSITE AUTOMOTIVE TRIM PART**
VERFAHREN ZUR HERSTELLUNG EINES VERBUNDVERKLEIDUNGSTEILS FÜR KRAFTFAHRZEUGE
PROCÉDÉ DE FABRICATION D'UNE PIÈCE COMPOSITE POUR GARNITURE AUTOMOBILE

(43) Date of publication of application: 15.04.2020
(73) Proprietor: Dow Global Technologies LLC, Midland, MI 48674 (US)
(72) Inventor: WALIA, Parvinder S., Midland, MI 48674 (US); ALLEN, Mark P., Auburn Hills, MI 48326 (US)
(74) Representative: Houghton, Mark Phillip
(86) International application number: PCT/US2017/036092
(87) International publication number: WO 2018/226210

(56) References cited:
- WO-A1-2011/149706
- WO-A1-2016/160228
- US-A1- 2005 271 888

## Description

### FIELD OF THE INVENTION

The present invention relates to a method for producing a composite part comprising a textured skin and a rigid or foam substrate layer, in particular a composite automotive trim part. The method comprises the steps of spraying or casting an aqueous thermoplastic dispersion onto a rigid or foam substrate composite followed by forming the composite into a composite part comprising a textured skin and a rigid or foam substrate layer. Preferably, the dispersion is derived from the extrusion melt blending of thermoplastic polymer, a dispersing agent, and water.

### BACKGROUND OF THE INVENTION

Many localized injection overmolding processes are already known. Examples include overmolding with the aid of two or more different tools; transfer overmolding; overmolding using a movable block or blocks; or even overmolding using a rotating mold or rotating plate.

Overmolding with the aid of two different tools includes injecting a first thermoplastic material into a first injection mold and then transferring the base piece thus manufactured into a second tool whose impression or cavity differs from that of the first mold, so as to achieve local overmolding with the aid of a second injected material, by means of a second machine. This type of process is particularly costly since it requires the use of as many machines and tools as the number of different sections that are to be formed. Furthermore, the cycle time is quite long for this type of process.

The same process can be adopted using just one tool, but the tool must include more molding cavities. One of the main problems posed by this sort of process is the size and cost of the tools. This size often makes it unsuitable for molding large pieces or pieces that require an oversized, and therefore very costly, machine to be used. Furthermore, the cycle time is quite long for this type of process.

Rotary overmolding is a process derived from the preceding technique, with the transfer being achieved by means of a rotating base. The drawbacks are the same as with the preceding process. This type of process has also give rise to the idea of bi-material machines with a central rotating plate.

Another known overmolding process is one that uses a mold with one or more movable blocks. This technique, using a single-impression tool, enables both a single-material piece and a bi-material piece to be obtained. However, this technique also has a major drawback in that one or more movable pieces, controlled by hydraulic cylinders, or other means, are required. Operating clearances are therefore required to avoid jamming. Moreover, at high production rates, the clearances will tend to increase. Thus, pieces produced by this type of process inevitably have burrs on the visible surface of the piece, which is clearly unacceptable for aesthetic pieces such as those used for the interior decor of a motor vehicle.

US2005/271888 discloses a method for forming a heat sealable coating on a substrate, wherein the substrate is formed from at least one oriented polymer. The method includes depositing an aqueous polymer dispersion on the substrate, wherein the aqueous polymer dispersion includes (A) at least one thermoplastic resin; (B) at least one dispersing agent; and (C) water; wherein the dispersion has a pH of less than 12, and drying the dispersion to form a first layer. WO2011/149706 discloses a method to manufacture shaped foam composite articles comprising a foam core and one or more skin and shaped foam composite articles made therefrom. Preferably the foam comprises a styrenic polymer foam and the skins may independently be mono-layered or multi-layered. WO2016/160228 discloses a method to make a rotational molded skin from a powdered polyolefin elastomer composition derived from spray drying an aqueous polyolefin dispersion composition wherein the aqueous polyolefin dispersion composition is derived from melt blending a polyolefin composition comprising an olefin block copolymer, a dispersing agent, and water, wherein said aqueous dispersion preferably has a pH less than 12.

In short, the known state-of-the-art processes have considerable drawbacks in that specific, numerous, and therefore costly, and on occasion oversized tools, must be used, requiring relatively long cycle times and creating only insufficient and imperfect quality pieces. Thus, as can be seen, the existing techniques do not meet the need that exists for so-called large "aesthetic" pieces such as those currently needed within industry and, in particular, within the automotive industry.

Therefore, a need exists to overcome the above-mentioned drawbacks and provide a cheap and easily-adapted process to enable making multi-material, locally overmolded pieces (or elements of pieces), particularly those consisting of different plastic materials, which can be made at high production rates with a very high level of quality, particularly as regards the finish and aesthetic appearance of the final product.

### SUMMARY OF THE INVENTION

The present invention is a process for making a composite part having a thickness, said part comprising a textured skin and a rigid or foam substrate layer comprising, consisting essentially of, or consisting of the steps of: A) applying an aqueous thermoplastic dispersion onto a first surface of a rigid or foam substrate forming a composite structure with a skin layer wherein the aqueous thermoplastic dispersion is derived from the extrusion melt blending of a) a thermoplastic composition in the presence of b) at least one dispersing agent, and c) water; B) providing a molding apparatus comprising a mold having a first mold half having a textured surface and a second mold half having a second surface opposite the first surface and being engageable with said first mold half such that when the mold halves are engaged a mold cavity there between is defined corresponding to the shape and the thickness of a part; C) heating the composite structure; D) placing the heated composite structure between the open mold halves in the molding apparatus such that the skin layer will be contacted by the textured surface of the first mold half; E) closing the mold halves and contacting the composite structure; F) forming a rigid or foam substrate composite part having a textured skin layer; H) cooling the composite part; I) opening the mold; and J) removing the composite part.

In one embodiment of the process disclosed herein above, the dispersion applied in step A) is allowed to dry prior to step C).

In one embodiment of the process disclosed herein above, the dispersion applied in step A) is allowed to dry during step C) and/or step D).

In one embodiment of the process disclosed herein above, one or both mold halves are heated prior to step D).

In one embodiment of the process disclosed herein above, the thermoplastic composition a) comprises one or more of an olefin block copolymer, a random olefin copolymer, a polyethylene, a propylene, a propylene, ethylene, α-olefin, a non-conjugated dienes based copolymers, an ethylene-vinyl acetate, an ethylene-vinyl alcohol, a chlorinated polyethylene, an alcohol functionalized polyolefin, an amine functional polyolefin, or a silane grafted polyolefin.

In another embodiment, the above mentioned aqueous thermoplastic dispersion is blended with a polyurethane (PU), acrylic, epoxy, alkylds, phenolic, or polyester aqueous dispersion to create a hybrid dispersion.

In one embodiment of the process of the present invention disclosed herein above, the dispersing agent b) is ethylene acrylic acid (EAA), ethylene-methacrylic acid (EMA), ethylene ethyl acrylate (EEA) copolymer, ethylene methyl methacrylate (EMMA), or ethylene butyl acrylate (EBA).

In one embodiment of the process of the present invention disclosed herein above, the aqueous thermoplastic dispersion is derived from the melt blending of a) an olefin block copolymer in the presence of (b) an ethylene acrylic acid as a dispersing agent and c) water.

In one embodiment of the process of the present invention disclosed herein above, the rigid or foam substrate layer comprises polypropylene (PP), polyethylene (PE), other polyolefins (PO), thermoplastic polyolefin (TPO), thermoplastic elastomers (TPE), acrylonitrile butadiene styrene (ABS), polycarbonate (PC), polycarbonate/acrylonitrile butadiene styrene/polycarbonate (PC/ABS), epoxy resin, polyvinyl chloride (PVC), polyurethane (PU), thermoplastic urethane elastomers (TPU), thermoplastic vulcanizate (TPV), nylon, polyester, or mixtures thereof.

In one embodiment of the process of the present invention disclosed herein above, the molding apparatus is a compression molding machine, a vacuum forming machine, or a thermoforming molding machine.

### BRIEF DESCRIPTION OF DRAWINGS

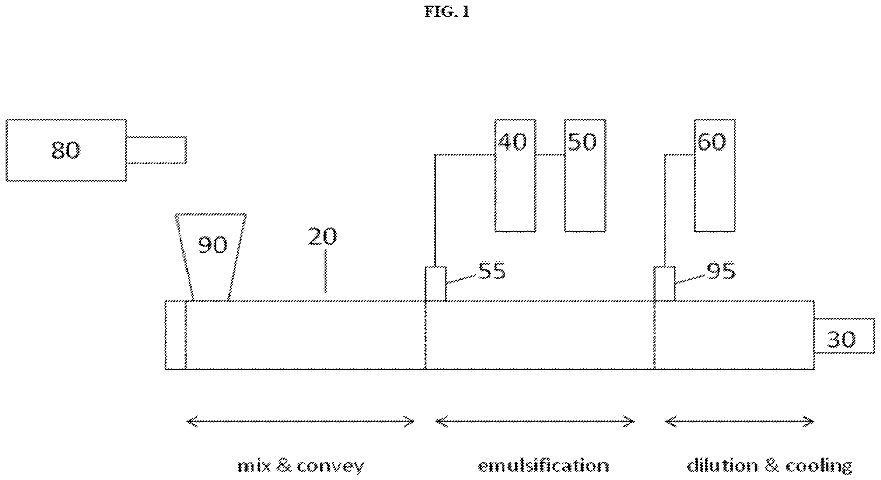

**FIG.1** is a schematic representation of a typical melt-extrusion apparatus used to prepare the aqueous pour point depressant dispersion compositions of the present invention.

### DETAILED DESCRIPTION OF THE INVENTION

The process of the present invention is a process for making a composite part comprising a textured skin and a rigid or foam substrate layer.

The textured skin of the present invention is made from an aqueous thermoplastic dispersion. The aqueous thermoplastic dispersion used for making the textured skin comprises a thermoplastic composition, a dispersing agent, and water, wherein said aqueous dispersion preferably has a pH less than 12.

Preferably the thermoplastic composition comprises one or more of an olefin block copolymer, a random olefin copolymer, a polyethylene, a propylene, a propylene, ethylene, α -olefin, a non-conjugated dienes based copolymers, an ethylene-vinyl acetate, an ethylene-vinyl alcohol, a chlorinated polyethylene, an alcohol functionalized polyolefin, an amine functional polyolefin, or a silane grafted polyolefin.

In another embodiment of the present invention the aqueous thermoplastic dispersion is blended with a polyurethane (PU), acrylic, epoxy, alkylds, phenolic, or polyester aqueous dispersion to create a hybrid dispersion. The hybrid dispersion can provide improved haptics (softness, ouch, scratch & mar) or/and improved adhesion.

In one embodiment, the aqueous thermoplastic dispersion comprises a polyolefin composition.

In one embodiment, the aqueous thermoplastic dispersion is a polyolefin composition comprising an olefin block copolymer.

The olefin block copolymers (OBC) used in the practice of this invention are well known, for example see USP 8,455,576; 7,579,408; 7,355,089; 7,524,911; 7,514,517; 7,582,716; and 7,504,347.

"Olefin block copolymer", "olefin block interpolymer", "multi-block interpolymer", "segmented interpolymer" and like terms refer to a polymer comprising two or more chemically distinct regions or segments (referred to as "blocks") preferably joined in a linear manner, that is, a polymer comprising chemically differentiated units which are joined end-to-end with respect to polymerized olefinic, preferable ethylenic, functionality, rather than in pendent or grafted fashion. In a preferred embodiment, the blocks differ in the amount or type of incorporated comonomer, density, amount of crystallinity, crystallite size attributable to a polymer of such composition, type or degree of tacticity (isotactic or syndiotactic), regio-regularity or regio-irregularity, amount of branching (including long chain branching or hyper-branching), homogeneity or any other chemical or physical property. Compared to block interpolymers of the prior art, including interpolymers produced by sequential monomer addition, fluxional catalysts, or anionic polymerization techniques, the multi-block interpolymers used in the practice of this invention are characterized by unique distributions of both polymer polydispersity (PDI or Mw/Mn or MWD), block length distribution, and/or block number distribution, due, in a preferred embodiment, to the effect of the shuttling agent(s) in combination with multiple catalysts used in their preparation. More specifically, when produced in a continuous process, the polymers desirably possess PDI from 1.7 to 3.5, preferably from 1.8 to 3, more preferably from 1.8 to 2.5, and most preferably from 1.8 to 2.2. When produced in a batch or semi-batch process, the polymers desirably possess PDI from 1.0 to 3.5, preferably from 1.3 to 3, more preferably from 1.4 to 2.5, and most preferably from 1.4 to 2.

The term "ethylene multi-block interpolymer" means a multi-block interpolymer comprising ethylene and one or more interpolymerizable comonomers, in which ethylene comprises a plurality of the polymerized monomer units of at least one block or segment in the polymer, preferably at least 90, more preferably at least 95 and most preferably at least 98, mole percent of the block. Based on total polymer weight, the ethylene multi-block interpolymers used in the practice of the present invention preferably have an ethylene content from 25 to 97, more preferably from 40 to 96, even more preferably from 55 to 95 and most preferably from 65 to 85, percent.

Because the respective distinguishable segments or blocks formed from two of more monomers are joined into single polymer chains, the polymer cannot be completely fractionated using standard selective extraction techniques. For example, polymers containing regions that are relatively crystalline (high density segments) and regions that are relatively amorphous (lower density segments) cannot be selectively extracted or fractionated using differing solvents. In a preferred embodiment the quantity of extractable polymer using either a dialkyl ether or an alkane-solvent is less than 10, preferably less than 7, more preferably less than 5 and most preferably less than 2, percent of the total polymer weight.

In addition, the multi-block interpolymers used in the practice of the invention desirably possess a PDI fitting a Schutz-Flory distribution rather than a Poisson distribution. The use of the polymerization process described in WO 2005/090427 and US Serial No. 11/376,835 results in a product having both a polydisperse block distribution as well as a polydisperse distribution of block sizes. This results in the formation of polymer products having improved and distinguishable physical properties. The theoretical benefits of a polydisperse block distribution have been previously modeled and discussed in Potemkin, Physical Review E (1998) 57 (6), pp. 6902-6912, and Dobrynin, J. Chem. Phvs. (1997) 107 (21), pp 9234-9238.

In a further embodiment, the polymers of the invention, especially those made in a continuous, solution polymerization reactor, possess a most probable distribution of block lengths. In one embodiment of this invention, the ethylene multi-block interpolymers are defined as having:
(A) Mw/Mn from about 1.7 to about 3.5, at least one melting point, Tm, in degrees Celsius, and a density, d, in grams/cubic centimeter, where in the numerical values of Tm and d correspond to the relationship
   *Tm*>-2002.9+4538.5(*d*)-2422.2(*d*)², or
(B) Mw/Mn from about 1.7 to about 3.5, and is characterized by a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationships:
   Δ*T*-0.1299(Δ*H*)+62.81 for Δ*H* greater than zero and up to 130 J/g
   Δ*T*>48 C for Δ*H* greater than 130 J/g
   wherein the CRYSTAF peak is determined using at least 5 percent of the cumulative polymer, and if less than 5 percent of the polymer has an identifiable CRYSTAF peak, then the CRYSTAF temperature is 30 C; or
(C) Elastic recovery, Re, in percent at 300 percent strain and 1 cycle measured with a compression-molded film of the ethylene/α-olefin interpolymer, and has a density, d, in grams/cubic centimeter, wherein the numerical values of Re and d satisfy the following relationship when ethylene/α-olefin interpolymer is substantially free of crosslinked phase:
   *Re*> 1481-1629(*d*); or
(D) Has a molecular weight fraction which elutes between 40 C and 130 C when fractionated using TREF, characterized in that the fraction has a molar comonomer content of at least 5 percent higher than that of a comparable random ethylene interpolymer fraction eluting between the same temperatures, wherein said comparable random ethylene interpolymer has the same comonomer(s) and has a melt index, density and molar comonomer content (based on the whole polymer) within 10 percent of that of the ethylene/α-olefin interpolymer; or
(E) Has a storage modulus at 25 C, G'(25 C), and a storage modulus at 100 C, G'(100 C), wherein the ratio of G'(25 C) to G'(100 C) is in the range of about 1:1 to about 9:1.
   The ethylene/α-olefin interpolymer may also have:
(F) Molecular fraction which elutes between 40 C and 130 C when fractionated using TREF, characterized in that the fraction has a block index of at least 0.5 and up to about 1 and a molecular weight distribution, Mw/Mn, greater than about 1.3; or
(G) Average block index greater than zero and up to about 1.0 and a molecular weight distribution, Mw/Mn greater than about 1.3.

Suitable monomers for use in preparing the ethylene multi-block interpolymers used in the practice of this present invention include ethylene and one or more addition polymerizable monomers other than ethylene. Examples of suitable comonomers include straight-chain or branched α-olefins of 3 to 30, preferably 3 to 20, carbon atoms, such as propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene and 1-eicosene; cyclo-olefins of 3 to 30, preferably 3 to 20, carbon atoms, such as cyclopentene, cycloheptene, norbornene, 5-methyl-2-norbornene, tetracyclododecene, and 2-methyl-1,4,5,8-dimethano-1,2,3,4,4a,5,8,8a-octahydronaphthalene; di- and polyolefins, such as butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidenenorbornene, vinyl norbornene, dicyclopentadiene, 7-methyl-1,6-octadiene, 4-ethylidene-8-methyl-1,7-nonadiene, and 5,9-dimethyl-1,4,8-decatriene; and 3-phenylpropene, 4-phenylpropene, 1,2-difluoroethylene, tetrafluoroethylene, and 3,3,3-trifluoro-1-propene.

Other ethylene multi-block interpolymers that can be used in the practice of this invention are elastomeric interpolymers of ethylene, a C₃₋₂₀ α-olefin, especially propylene, and, optionally, one or more diene monomers. Preferred α-olefins for use in this embodiment of the present invention are designated by the formula CH₂=CHR^{∗}, where R^{∗} is a linear or branched alkyl group of from 1 to 12 carbon atoms. Examples of suitable α-olefins include, but are not limited to, propylene, isobutylene, 1-butene, 1-pentene, 1-hexene, 4-methyl-1-pentene, and 1-octene. One particularly preferred α-olefin is propylene. The propylene based polymers are generally referred to in the art as EP or EPDM polymers. Suitable dienes for use in preparing such polymers, especially multi-block EPDM type-polymers include conjugated or non-conjugated, straight or branched chain-, cyclic- or polycyclic dienes containing from 4 to 20 carbon atoms. Preferred dienes include 1,4-pentadiene, 1,4-hexadiene, 5-ethylidene-2-norbornene, dicyclopentadiene, cyclohexadiene, and 5-butylidene-2-norbornene. One particularly preferred diene is 5-ethylidene-2-norbornene.

Because the diene containing polymers contain alternating segments or blocks containing greater or lesser quantities of the diene (including none) and α-olefin (including none), the total quantity of diene and α-olefin may be reduced without loss of subsequent polymer properties. That is, because the diene and α-olefin monomers are preferentially incorporated into one type of block of the polymer rather than uniformly or randomly throughout the polymer, they are more efficiently utilized and subsequently the crosslink density of the polymer can be better controlled. Such crosslinkable elastomers and the cured products have advantaged properties, including higher tensile strength and better elastic recovery.

The ethylene multi-block interpolymers useful in the practice of this invention have a density of less than 0.90, preferably less than 0.89, more preferably less than 0.885, even more preferably less than 0.88 and even more preferably less than 0.875, g/cc. The ethylene multi-block interpolymers typically have a density greater than 0.85, and more preferably greater than 0.86, g/cc. Density is measured by the procedure of ASTM D-792. Low density ethylene multi-block interpolymers are generally characterized as amorphous, flexible and having good optical properties, e.g., high transmission of visible and UV-light and low haze.

The ethylene multi-block interpolymers useful in the practice of this invention typically have a melt flow rate (MFR) of 1-10 grams per 10 minutes (g/10 min) as measured by ASTM D1238 (190° C./2.16 kg).

The ethylene multi-block interpolymers useful in the practice of this invention have a 2% secant modulus of less than about 150, preferably less than about 140, more preferably less than about 120 and even more preferably less than about 100, mPa as measured by the procedure of ASTM D-882-02. The ethylene multi-block interpolymers typically have a 2% secant modulus of greater than zero, but the lower the modulus, the better the interpolymer is adapted for use in this invention. The secant modulus is the slope of a line from the origin of a stress-strain diagram and intersecting the curve at a point of interest, and it is used to describe the stiffness of a material in the inelastic region of the diagram. Low modulus ethylene multi-block interpolymers are particularly well adapted for use in this invention because they provide stability under stress, e.g., less prone to crack upon stress or shrinkage. The ethylene multi-block interpolymers useful in the practice of this invention typically have a melting point of less than about 125. The melting point is measured by the differential scanning calorimetry (DSC) method described in WO 2005/090427 (US2006/0199930). Ethylene multi-block interpolymers with a low melting point often exhibit desirable flexibility and thermoplasticity properties useful in the fabrication of the wire and cable sheathings of this invention.

The thermoplastic composition comprising an OBC may further comprise one or more of a random olefin copolymer, a polyethylene, a propylene, a propylene, ethylene, alpha-olefin, a non-conjugated dienes based copolymers (EPDM), an ethylene-vinyl acetate, an ethylene-vinyl alcohol, a chlorinated polyethylene, an alcohol functionalized polyolefin, an amine functional polyolefin, or a silane grafted polyolefin.

The aqueous thermoplastic dispersion of the present invention uses a dispersing agent (or stabilizing agent) to promote the formation of a stable dispersion or emulsion. In selected embodiments, the stabilizing agent may be a surfactant, a polymer (different from the OBC polymer detailed above), or mixtures thereof. In certain embodiments, the polymer may be a polar polymer, having a polar group as either a comonomer or grafted monomer. Examples of suitable polar polyolefin are ethylene-vinyl acetate, ethylene-vinyl alcohol, chlorinated polyethylene, alcohol or amine functional polyolefin, silane grafted polyolefin. In preferred embodiments, the stabilizing agent comprises one or more polar polyolefins, having a polar group as either a comonomer or grafted monomer. For example, the dispersing agent may include an ethylene/alpha-beta unsaturated carboxylic acid copolymer. In some embodiments, the ethylene/alpha-beta unsaturated carboxylic acid copolymer may include an ethylene-acid copolymer, such as an ethylene-acrylic acid copolymer or an ethylene methacrylic acid copolymer.

Typical polymers include ethylene-acrylic acid (EAA) and ethylene-methacrylic acid copolymers, such as those available under the trademarks PRIMACOR^{™} (trademark of The Dow Chemical Company), NUCREL^{™} (trademark of E.I. DuPont de Nemours), and ESCOR^{™} (trademark of ExxonMobil) and described in USP 4,599,392; 4,988,781; and 5,938,437. Other polymers include ethylene-methacrylic acid (EMA), ethylene ethyl acrylate (EEA) copolymer, ethylene methyl methacrylate (EMMA), and ethylene butyl acrylate (EBA). Other ethylene-carboxylic acid copolymer may also be used. Those having ordinary skill in the art will recognize that a number of other useful polymers may also be used.

Other surfactants that may be used include long chain fatty acids or fatty acid salts having from 12 to 60 carbon atoms. In other embodiments, the long chain fatty acid or fatty acid salt may have from 12 to 40 carbon atoms.

If the polar group of the polymer is acidic or basic in nature, the stabilizing polymer may be partially or fully neutralized with a neutralizing agent to form the corresponding salt. In certain embodiments, neutralization of the stabilizing agent, such as a long chain fatty acid or EAA, may be from 25% to 200% on a molar basis; from 50% to 110% on a molar basis in other embodiments. For example, for EAA, the neutralizing agent is a base, such as ammonium hydroxide or potassium hydroxide, for example. Other neutralizing agents may include lithium hydroxide or sodium hydroxide, for example. Those having ordinary skill in the art will appreciate that the selection of an appropriate neutralizing agent depends on the specific composition formulated, and that such a choice is within the knowledge of those of ordinary skill in the art.

Additional surfactants that may be useful in the practice of the present invention include cationic surfactants, anionic surfactants, zwitterionic, or non-ionic surfactants. Examples of anionic surfactants include sulfonates, carboxylates, and phosphates. Examples of cationic surfactants include quaternary amines. Examples of non-ionic surfactants include block copolymers containing ethylene oxide and silicone surfactants. Surfactants useful in the practice of the present invention may be either external surfactants or internal surfactants. External surfactants are surfactants that do not become chemically reacted into the polymer during dispersion preparation. Examples of external surfactants useful herein include salts of dodecyl benzene sulfonic acid and lauryl sulfonic acid salt. Internal surfactants are surfactants that do become chemically reacted into the polymer during dispersion preparation. An example of an internal surfactant useful herein includes 2,2-dimethylol propionic acid and its salts.

In particular embodiments, the dispersing agent or stabilizing agent may be used in an amount ranging from greater than zero to about 60% by weight based on the amount of base polymer (or base polymer mixture) used. For example, long chain fatty acids or salts thereof may be used in an amount ranging from 0.5% to 10% by weight based on the amount of base polymer. In other embodiments, ethylene-acrylic acid or ethylene-methacrylic acid copolymers may be used in an amount from 0.5% to 60% by weight based on polymer. In yet other embodiments, sulfonic acid salts may be used in an amount from 0.5% to 10% by weight based on the amount of base polymer.

While any method may be used, one convenient way to prepare the aqueous pour point dispersion compositions described herein is by melt-kneading. Any melt-kneading means known in the art may be used. In some embodiments a kneader, a Banbury mixer, single-screw extruder, or a multi-screw extruder is used. The melt-kneading may be conducted under the conditions which are typically used for melt-kneading the OBC resin. A process for producing the dispersions in accordance with the present invention is not particularly limited. One preferred process, for example, is a process comprising melt-kneading the OBC and EAA, and any other additives according to USP 5,756,659; 7,763,676; and 7,935,755. A preferred melt-kneading machine is, for example, a multi screw extruder having two or more screws, to which a kneading block can be added at any position of the screws. If desired, it is allowable that the extruder is provided with a first material-supplying inlet and a second material-supplying inlet, and further third and fourth material-supplying inlets in this order from the upper stream to the downstream along the flow direction of a material to be kneaded. Further, if desired, a vacuum vent may be added at an optional position of the extruder. In some embodiments, the pour point dispersion comprising the thermoplastic polymer, dispersing agent, and any other additives is first diluted to contain about 1 to about 3 percent by weight of water and then subsequently further diluted to comprise greater than 25 percent by weight of water. In some embodiments, the further dilution provides a dispersion with at least about 30 percent by weight of water. The aqueous dispersion obtained by the melt kneading may be further supplemented with a glycol, preferably ethylene glycol. The aqueous pour point depressant dispersions described hereinabove may be used as prepared or diluted further with additional water and/or glycol.

**FIG. 1** schematically illustrates an extrusion apparatus which can be used in the process of the present invention. An extruder **20,** preferably a twin screw extruder, is coupled to a back pressure regulator, melt pump, or gear pump, **30.** Preferably, the apparatus further comprises a base reservoir **40** and an initial water reservoir **50,** each of which includes a pump (not shown). Desired amounts of base and initial water are provided from the base reservoir **40** and the initial water reservoir **50,** respectively. Any suitable pump may be used, but in some embodiments a pump that provides a flow of about 150 cc/min at a pressure of 240 bar may be used to provide the base and the initial water to the extruder **20.** In other embodiments, a liquid injection pump provides a flow of 300 cc/min at 200 bar or 600 cc/min at 133 bar. In some embodiments the base and initial water are preheated in a preheater.

The OBC, in the form of pellets, powder, or flakes, is fed from the feeder **80** to an inlet **90** of the extruder **20** where the resin is melted or compounded. In some embodiments, the EAA dispersing agent and/or stabilizing agent is added to the resin through an opening along with the resin and in other embodiments, the dispersing agent and/or stabilizing agent is provided separately to the twin screw extruder **20.** The resin melt is then delivered from the mix and convey zone to an emulsification zone of the extruder where the initial amount of water and base from the reservoirs **40** and **50** is added through inlet **55.** In some embodiments, dispersing agent may be added additionally or exclusively to the water stream. In some embodiments, the emulsified mixture is further diluted with additional water and/or glycol and/or stabilizing agent via inlet **95** from reservoir **60** in a dilution and cooling zone of the extruder **20.** Typically, the dispersion is diluted to at least 30 weight percent water in the cooling zone. In addition, the diluted mixture may be diluted any number of times until the desired dilution level is achieved.

In one embodiment of the method to make the aqueous thermoplastic dispersions of the present invention, step a, all of the OBC, the dispersing agent EAA; and water are combined to form an aqueous dispersion of OBC in one step.

In a another embodiment of the method to make the aqueous thermoplastic dispersions of the present invention, some or all of the water and/or stabilizing agent is not added into the twin screw extruder **20** but rather, step b, to a stream containing the dispersed polymer after it has exited from the extruder. In other words, step b does not occur in the extruder in which the aqueous dispersion of OBC is produced. In this manner, steam pressure build-up in the extruder **20** is minimized.

In a preferred embodiment, a basic substance or aqueous solution, dispersion or slurry thereof is added to the dispersion at any point of the process, preferably to the extruder. Typically the basic substance is added as an aqueous solution. But in some embodiments, it is added in other convenient forms, such as pellets or granules. In some embodiments, the basic substance and water are added through separate inlets of the extruder. Examples of the basic substance which may be used for the neutralization or the saponification in the melt kneading process include alkaline metals and alkaline earth metals such as sodium, potassium, calcium, strontium, barium; inorganic amines such as hydroxylamine or hydrazine; organic amines such as methylamine, ethylamine, ethanolamine, cyclohexylamine, tetramethylammonium hydroxide; oxide, hydroxide, and hydride of alkaline metals and alkaline earth metals such as sodium oxide, sodium peroxide, potassium oxide, potassium peroxide, calcium oxide, strontium oxide, barium oxide, sodium hydroxide, potassium hydroxide, calcium hydroxide, strontium hydroxide, barium hydroxide, sodium hydride, potassium hydride, calcium hydride; and weak acid salts of alkaline metals and alkaline earth metals such as sodium carbonate, potassium carbonate, sodium hydrogencarbonate, potassium hydrogencarbonate, calcium hydrogencarbonate, sodium acetate, potassium acetate, calcium acetate; or ammonium hydroxide. In particular embodiments, the basic substance is a hydroxide of an alkaline metal or a hydroxide of an alkali metal. In some embodiments, the basic substance is selected from potassium hydroxide, sodium hydroxide and combinations thereof.

The OBC polymer of the aqueous thermoplastic dispersion of the present invention has an advantageous particle size distribution. In particular embodiments, the dispersed OBC polymer has a particle size distribution defined as volume average particle diameter (Dv) divided by number average particle diameter (Dn) of equal to or less than 2.5, preferably equal to or less than 2.0. In other embodiments, the dispersions have a particle size distribution of less than or equal to 1.9, 1.7, or 1.5.

A preferred volume average particle size is equal to or less than 2 micron (µm), preferably equal to or less than 1.5 µm, preferably equal to or less than 1.2 µm, and more preferably equal to or less than 1 µm. In other embodiments, the average particle size ranges from 0.05 µm to 1 µm. In still other embodiments, the average particle size of the dispersion ranges from 0.5 µm to 1.2 µm, preferably 0.5 µm to 1 µm. For particles that are not spherical the diameter of the particle is the average of the long and short axes of the particle. Particle sizes can be measured on a Coulter LS230 light-scattering particle size analyzer or other suitable device.

The dispersions of the present invention have a pH equal to or greater than 5, preferably equal to or greater than 8, and more preferably equal to or greater than 10. The dispersions of the present invention have a pH equal to or less than 13.5, preferably equal to or less than 13, and more preferably equal to or less than 12.

The aqueous thermoplastic dispersion of the present invention may be applied to the rigid or foam substrate by casting or spraying. The aqueous thermoplastic dispersion of the present invention may be applied through a nozzle of any suitable spray equipment, for example a spray gun. The dispersion is sprayed onto the surface of the rigid or foam substrate. The dried skin preferably has an average thickness of at least 0.5 mm, preferably of at least 0.75 mm and more preferably of at least 1 mm.

In one embodiment of the process of the present invention, after the aqueous thermoplastic dispersion of the present invention has been sprayed onto the surface of the rigid or foam substrate, it is allowed to dry before the composite is formed into a part.

In another embodiment of the process of the present invention, after the aqueous thermoplastic dispersion of the present invention has been sprayed onto the surface of the rigid or foam substrate, before drying, the composite is formed into a part where the dispersion dries during or after the step of forming the part.

Depending on the desired thickness of the final skin, more than one spray application may be performed, in such an embodiment, a first layer is sprayed and allowed to dry, a second layer is sprayed and allowed to dry, and a third layer is sprayed and allowed to dry, etc. until the desired number of layers/skin thickness is achieved. The thickness and texture is selected to provide a unique skin touch and high quality feeling. The spray skin of the present invention has a first surface and a second surface.

In one embodiment, different dispersions can be used for each layer e.g., the top layer can be based on a softer (50-70 Shore A) elastomer to impart improved haptics.

The aqueous thermoplastic dispersion of the present invention may comprise one or more of a dye, a pigment, an organic filler, an inorganic filler (including clay, talc, calcium carbonate, titanium dioxide, glass fiber, carbon fibers, nano-sized particles), a plasticizer, a stabilizer (such as, but not limited to antioxidants, UV stabilizers, fire retardants, and the like), a surfactant, an anti-static agent, a tackifier, an oil extender (including paraffinic or napthelenic oils), a crosslinking agent (such as sulfur, peroxide, phenolic, silane or azide based compounds), a chemical blowing agent, an anti-microbial agent, a thickening agent, or an age resister.

In one embodiment of the process of the present invention the aqueous thermoplastic dispersion is blended with an aqueous colorant. Preferably, the aqueous colorant comprises one or more of a dye, a pigment, an organic filler, an inorganic filler (including clay, talc, calcium carbonate, titanium dioxide, glass fiber, carbon fibers, nano-sized particles), a plasticizer, a stabilizer (such as, but not limited to antioxidants, UV stabilizers, fire retardants, and the like), a surfactant, an anti-static agent, a tackifier, an oil extender (including paraffinic or napthelenic oils), a crosslinking agent (such as sulfur, peroxide, phenolic, silane or azide based compounds), a chemical blowing agent, an anti-microbial agent, a thickening agent, or an age resister.

In one embodiment of the process of the present invention the aqueous thermoplastic dispersion is blended with other aqueous of dispersions (for example an aqueous acrylic dispersion or an aqueous polyurethane dispersion) to create a hybrid dispersion that may improve haptics, gloss, and abrasion performance.

The rigid or foam substrate layer of the present invention preferably comprises a thermoplastic resin such as polypropylene (PP), polyethylene (PE), other polyolefins (PO), thermoplastic polyolefin (TPO), thermoplastic elastomers (TPE), acrylonitrile butadiene styrene (ABS), polycarbonate (PC), polycarbonate/acrylonitrile butadiene styrene/polycarbonate (PC/ABS), epoxy resin, polyvinyl chloride (PVC), polyurethane (PU), thermoplastic urethane elastomers (TPU), thermoplastic vulcanizate (TPV), nylon, polyester, or mixtures thereof as well as any other compatible rigid type material known to persons skilled in the art.

The thermoplastic resin may further comprise a reinforcement material for example to improve the flexural modulus or other characteristics of the substrate material. For example, the use of glass fibers and/or glass fiber mats can increase the flexural modulus of a polyurethane substrate layer to a value higher than 600 MPa (measured according to DIN EN 310) whilst without a reinforcement, the flexural modulus of a polyurethane substrate layer is usually lower than 400 MPa. Other suitable reinforcement materials are carbon fibers, silica, talc, clay, mica, silica, wollastonite, calcium carbonate, barium sulfate, hollow glass, plastic spheres, expandable spheres, natural plant fibers such as kenaf, hemp, flax, jute, and sisal, and the like.

Preferably, when the substrate layer of the present invention is foam the thermoplastic resin is a foamed thermoplastic elastomer, foamed polypropylene, foamed polyurethane, or foamed PVC. The foamed material may be activated, or foamed, by a blowing agent, such as sodium bicarbonate and the like, any gas such as nitrogen, or any other commonly known blowing agent. Preferably, the blowing agent is combined, or mixed, with the thermoplastic polymer in an amount from 0.1% to 5% by weight of the mixture, more advantageously from 0.5% to 3% by weight.

The process of the present invention requires a mold comprising a first mold half, having a first mold surface with a predetermined three-dimensional shape said first mold half surface being textured, and a second mold half, having a second mold surface with a further predetermined three-dimensional shape. The first and second mold halves are movable with respect to one another to open and close said mold and define a first mold cavity in the closed mold position having a first gap, preferably the thickness of the composite part to be produced.

An aqueous thermoplastic dispersion as disclosed herein above is applied using a low pressure forming process, preferably by spraying or casting, onto the rigid or foam substrate, preferably in the form of a sheet.

The dispersion coated rigid or foam substrate, preferably in the form of a coated sheet, may or may not be heated prior to placing in the molding apparatus and/or may or may not be heated after placement in the molding machine but before shaping.

The molding apparatus comprises a mold having a first mold half having a textured surface and a second mold half having a second surface opposite the first surface and being engageable with said first mold half such that when the mold halves are engaged a mold cavity there between is defined corresponding to the shape and the thickness of a part. Preferably molding apparatus is a compression molding machine, vacuum forming machine, or a thermoforming machine.

The skin layer, i.e., the dispersion layer, is placed between the mold halves such that the skin layer will be contacted by the textured surface of the first mold half.

In one embodiment of the process of the present invention, the one or both mold half is heated, preferably to temperature equal to or greater than 50°C, more preferably equal to or greater than 65°C, and more preferably equal to or greater than 80°C. Preferably, the mold half is heated, to temperature equal to or less than 110C, more preferably equal to or less than 100°C, and more preferably equal to or less than 90°C.

In one embodiment of the process of the present invention, neither mold half is heated.

In one embodiment, the process of the present invention comprises, consist essentially of, or consists of the following steps: A) applying an aqueous thermoplastic dispersion as disclosed herein above onto a first surface of a rigid or foam substrate forming a composite structure; B) providing a molding apparatus comprising a mold having a first mold half having a textured surface and a second mold half having a second surface opposite the first surface and being engageable with said first mold half such that when the mold halves are engaged a mold cavity there between is defined corresponding to the shape and the thickness of a part; C) heating the composite structure; D) placing the heated composite structure between the open mold halves in the molding apparatus such that the skin layer will be contacted by the textured surface of the first mold half; E) closing the mold halves and contacting the composite structure; F) forming a rigid or foam substrate composite part having a textured skin layer; H) cooling the composite part; I) opening the mold; and J) removing the composite part.

In one embodiment of the present invention, the substrate layer is formed or molded directly to the skin, in other words, with no adhesive or any other layer between the skin and the rigid or foam substrate layer.

In another embodiment of the present invention, an adhesive layer is interposed between the skin and the rigid or foam substrate layer.

The foregoing may be better understood by the following Examples, which are presented for purposes of illustration and are not intended to limit the scope of this invention.

### EXAMPLES

Examples 1 to 3.

The following aqueous thermoplastic dispersions comprise a polyolefin polymer, a dispersing agent, water, and are neutralized with KOH. The compositions of the Example 1 is given in Table 1. The following components are used in Examples 1 to 3:
"SLEP" is a substantially linear ethylene-octene copolymer elastomer with a 5 g/10 min MFR (190°C/2.16 Kg) and a density of 0.868 g/cm³ available as ENGAGE^{™} 8200 from The Dow Chemical Company;
"EAA" is an ethylene acrylic acid copolymer having 20% acrylic acid with a density of 0.958 g/cm³, a 300 g/10 min MFR (190°C/2.16 Kg), and a melting temperature of 78°C available as PRIMACOR^{™} 5980i from The Dow Chemical Company;
"Surfactant" is a nonionic surfactant based on hydrophobically modified polyethylene oxide urethane chemistry available as ACRYSOL^{™} RM-2020 from The Dow Chemical Company;
"Glass Mat" is a 40 wt% glass fiber mat having a density of 1.19 g/cm3 and a thickness of 3.7 mm available as R401-B01 from Azdel; and
"Black" is an aqueous black colorant available as CABOJET^{™} 300 from Cabot Corporation.

In the following Examples a polyolefin resin is dispersed using the method described in USP 7,763,676, using a dispersing agent and water as the solvent. The extruder based mechanical dispersion process imparts high shear on a polymer melt/water mixture to facilitate a water continuous system with small polymer particles in the presence of surface active agents that reduce the surface tension between the polymer melt and water. A high solids content water continuous dispersion is formed in the emulsification zone of the extruder also known as high internal phase emulsion (HIPE) zone, which is then gradually diluted to the desired solids concentration, as the HIPE progresses from the emulsification zone to the first and second dilution zones.

The polyolefin polymer is fed into the feed throat of the extruder by means of a loss-in weight feeder. The dispersion agent is added with the polyolefin polymer. The extruder and its elements are made of Nitrided Carbon Steel. The extruder screw elements are chosen to perform different unit operations as the ingredients pass down the length of the screw. There is first a mixing and conveying zone, next an emulsification zone, and finally a dilution and cooling zone. Steam pressure at the feed end is contained by placing kneading blocks and blister elements between the melt mixing zone and was contained and controlled by using a Back-Pressure Regulator. ISCO dual-syringe pumps metered the Initial Water, Base, and Dilution flows to their respective injection ports. The polyolefin, dispersing agent, and water are melt kneaded in the twin screw extruder at a screw RPM of 1150 and neutralized with KOH. Process parameters and product characteristics are summarized in Table 1. In Table 1, the mean particle size of the dispersed polymer phase is measured by a Coulter LS230 particle analyzer consisted of an average volume diameter in microns. Viscosity is determined according to Brookfield Viscometer. Solids are determined by moisture analyzer. Filterable residue is determined by filtration through a 70 mesh (200um). Too much residue can have a negative impact on the ability to spray via a nozzle gun.

**Table 1**

| | | Example 1 |
|---|---|---|
| COMPOSITION | | |
| | Polyolefin, % | SELP, 60 |
| | Dispersing agent, % | EAA, 40 |
| | Surfactant, % | |
| | Base | KOH |
| | Degree of Neutralization, % | 84.9 |
| | Target solids, wt% | 42 |
| PROCESS PARAMETER | | |
| | Extruder pressure, psi | 325 |
| | Extruder outlet temperature, °C | 99 |
| | Dispersion temperature, °C | 26 |
| | Extruder amps | 79 |
| PRODUCT CHARACTERISTICS | | |
| | Mean particle size, micron | 1.34 |
| | pH | 10.07 |
| | Viscosity @ 20 RPM, cP | 288 |
| | Actual solids, wt% | 40.57 |
| | Filterable residue, ppm | 26 |

### Example 2.

Example 2 is Example 1 with 5 wt% of the aqueous black colorant added. Example 2 is sprayed onto a 4.5 inch by 4.5 inch by 0.25 inch plaque of the AZDEL glass mat and dried to form a composite with a dried skin thickness of 0.5mm. The composite is placed in a compression molding machine having a 5 inch by 5 inch textured mold on the stationary platen with the skin surface placed against the textured mold. Spacers measuring 0.3mm less than the thickness of the textured mold plus the composite are used. The composite is pressed by contact with a movable upper platen. Both platens are heated to 190°C and the composite and mold are placed on the immovable platen for 10 minutes before contact and pressure is applied from the movable platen. Pressure is applied, increased to 20 tons, and maintained at 190°C for 5 minutes. The pressure is released and the lower platen is cooled to 5°C for five minutes and then the textured skin and glass mat composite is removed.

The grain replication and skin adhesion for Example 2 are both very good.

### Example 3.

Example 3 is Example 1 with 5 wt% of the ACRYSOL surfactant added. Example 3 is cast onto a 4.5 inch by 4.5 inch by 0.25 inch plaque of the AZDEL glass mat. Without drying, the dispersion coated glass mat composite is placed on the textured mold with the dispersion coating against the textured surface. The mold with composite is placed in an air tight plastic bag with a valve, sealed, and the valve connected to a vacuum pump via a vacuum tube. The bag and its contents are placed in a convention oven at 90°C and a vacuum of 2mm Hg is drawn using a vacuum pump. Vacuum and heat are applied for 10 minutes, then the bag and its contents are allowed to return to ambient pressure, then removed from the oven, and allowed to cool to ambient temperature. The textured skin and glass mat composite is removed from the bag.

The skin in Example 3 is clear as no colorant is added. The grain replication and skin adhesion for Example 3 are both very good.

## Claims

1. A process for making a composite part having a shape and a thickness comprising a textured skin and a rigid or foam substrate layer comprising the steps of:
A) applying an aqueous thermoplastic dispersion onto a first surface of a rigid or foam substrate forming a composite structure with a skin layer wherein the aqueous thermoplastic dispersion is derived from the extrusion melt blending of
a) a thermoplastic composition in the presence of
b) at least one dispersing agent, and
c) water;
B) providing a molding apparatus comprising a mold having a first mold half having a textured surface and a second mold half having a second surface opposite the first surface and being engageable with said first mold half such that when the mold halves are engaged a mold cavity there between is defined corresponding to the shape and the thickness of a part;
C) heating the composite structure;
D) placing the heated composite structure between the open mold halves in the molding apparatus such that the skin layer will be contacted by the textured surface of the first mold half;
E) closing the mold halves and contacting the composite structure;
F) forming a rigid or foam substrate composite part having a textured skin layer;
H) cooling the composite part;
I) opening the mold; and
J) removing the composite part.

2. The process of Claim 1 wherein the dispersion applied in step A) is allowed to dry prior to step C).

3. The process of Claim 1 wherein the dispersion applied in step A) is allowed to dry during step C) and/or step D).

4. The process of Claim 1 wherein one or both mold halves are heated prior to step D).

5. The process of Claim 1 wherein a) the thermoplastic composition comprises one or more of an olefin block copolymer, a random olefin copolymer, a polyethylene, a propylene, a propylene, ethylene, α-olefin, a non-conjugated dienes based copolymers, an ethylene-vinyl acetate, an ethylene-vinyl alcohol, a chlorinated polyethylene, an alcohol functionalized polyolefin, an amine functional polyolefin, or a silane grafted polyolefin.

6. The process of Claim 1 wherein b) the dispersing agent is ethylene acrylic acid (EAA), ethylene-methacrylic acid (EMA), ethylene ethyl acrylate (EEA) copolymer, ethylene methyl methacrylate (EMMA), or ethylene butyl acrylate (EBA).

7. The process of Claim 1 wherein the aqueous thermoplastic dispersion is derived from the extrusion melt blending of a) an olefin block copolymer in the presence of (b) an ethylene acrylic acid as a dispersing agent and c) water.

8. The process of Claim 1 wherein the rigid or foam substrate layer comprises polypropylene (PP), polyethylene (PE), other polyolefins (PO), thermoplastic polyolefin (TPO), thermoplastic elastomers (TPE), acrylonitrile butadiene styrene (ABS), polycarbonate (PC), polycarbonate/acrylonitrile butadiene styrene/polycarbonate (PC/ABS), epoxy resin, polyvinyl chloride (PVC), polyurethane (PU), thermoplastic urethane elastomers (TPU), thermoplastic vulcanizate (TPV), nylon, polyester, or mixtures thereof.

9. The process of Claim 1 wherein the aqueous thermoplastic dispersion is blended with a polyurethane (PU), acrylic, epoxy, alkylds, phenolic, or polyester aqueous dispersion to create a hybrid dispersion.

10. The process of Claim 1 wherein the molding apparatus is a compression molding machine.

11. The process of Claim 1 wherein the molding apparatus is a vacuum forming machine or a thermoforming machine.

## Patentansprüche

1. Ein Verfahren zum Herstellen eines eine Form und eine Dicke aufweisenden Verbundteils, das eine strukturierte Haut und eine Steif- oder Schaumstoffsubstratschicht beinhaltet, beinhaltend die folgenden Schritte:
A) Aufbringen einer wässrigen thermoplastischen Dispersion auf einer ersten Oberfläche eines Steif- oder Schaumstoffsubstrats, das eine Verbundstruktur mit einer Hautschicht bildet, wobei die wässrige thermoplastische Dispersion von dem Extrusionsschmelzmischen von Folgendem herrührt:
a) einer thermoplastischen Zusammensetzung in Gegenwart von
b) mindestens einem Dispergiermittel und
c) Wasser;
B) Bereitstellen einer Formvorrichtung, beinhaltend eine Form mit einer ersten Formhälfte, die eine strukturierte Oberfläche aufweist, und einer zweiten Formhälfte, die eine der ersten Oberfläche gegenüberliegende zweite Oberfläche aufweist und mit der ersten Formhälfte in Eingriff gebracht werden kann, sodass, wenn die Formhälften in Eingriff stehen, zwischen ihnen eine Formhöhlung definiert wird, die der Form und der Dicke eines Teils entspricht;
C) Erwärmen der Verbundstruktur;
D) Platzieren der erwärmten Verbundstruktur zwischen den offenen Formhälften in der Formvorrichtung, sodass die Hautschicht mit der strukturierten Oberfläche der ersten Formhälfte in Kontakt gebracht wird;
E) Schließen der Formhälften und In-Kontakt-Bringen der Verbundstruktur;
F) Bilden eines Steif- oder Schaumstoffsubstratverbundteils, das eine strukturierte Hautschicht aufweist;
H) Kühlen des Verbundteils;
I) Öffnen der Form; und
J) Entnehmen des Verbundteils.

2. Verfahren gemäß Anspruch 1, wobei die in Schritt A) aufgebrachte Dispersion vor Schritt C) trocknen gelassen wird.

3. Verfahren gemäß Anspruch 1, wobei die in Schritt A) aufgebrachte Dispersion während Schritt C) und/oder Schritt D) trocknen gelassen wird.

4. Verfahren gemäß Anspruch 1, wobei eine oder beide Formhälften vor Schritt D) erwärmt werden.

5. Verfahren gemäß Anspruch 1, wobei a) die thermoplastische Zusammensetzung eines oder mehrere von einem Olefinblockcopolymer, einem statistischen Olefincopolymer, einem Polyethylen, einem Propylen, einem Propylen, Ethylen, α-Olefin, einem auf nicht konjugierten Dienen basierten Copolymer, einem Ethylenvinylacetat, einem Ethylenvinylalkohol, einem chlorierten Polyethylen, einem alkoholfunktionalisierten Polyolefin, einem aminfunktionellen Polyolefin oder einem silangepfropften Polyolefin beinhaltet.

6. Verfahren gemäß Anspruch 1, wobei b) das Dispergiermittel Ethylenacrylsäure (EAA), Ethylenmethacrylsäure (EMA), Ethylenethylacrylat(EEA)-Copolymer, Ethylenmethylmethacrylat (EMMA) oder Ethylenbutylacrylat (EBA) ist.

7. Verfahren gemäß Anspruch 1, wobei die wässrige thermoplastische Dispersion von dem Extrusionsschmelzmischen a) eines Olefinblockcopolymers in Gegenwart von (b) einer Ethylenacrylsäure als Dispergiermittel und c) Wasser herrührt.

8. Verfahren gemäß Anspruch 1, wobei die Steif- oder Schaumstoffsubstratschicht Polypropylen (PP), Polyethylen (PE), andere Polyolefine (PO), thermoplastisches Polyolefin (TPO), thermoplastische Elastomere (TPE), Acrylnitril-Butadien-Styrol (ABS), Polycarbonat (PC), Polycarbonat/Acrylnitril-Butadien-Styrol/Polycarbonat (PC/ABS), Epoxidharz, Polyvinylchlorid (PVC), Polyurethan (PU), thermoplastische Urethanelastomere (TPU), thermoplastisches Vulkanisat (TPV), Nylon, Polyester oder Mischungen davon beinhaltet.

9. Verfahren gemäß Anspruch 1, wobei die wässrige thermoplastische Dispersion mit einer wässrigen Polyurethan- (PU), Acryl-, Epoxid-, Alkyd-, Phenol- oder Polyesterdispersion gemischt wird, um eine hybride Dispersion zu erzeugen.

10. Verfahren gemäß Anspruch 1, wobei die Formvorrichtung eine Formpressmaschine ist.

11. Verfahren gemäß Anspruch 1, wobei die Formvorrichtung eine Vakuumformmaschine oder eine Thermoformmaschine ist.

## Revendications

1. Un procédé pour fabriquer une pièce composite ayant une forme et une épaisseur comprenant une peau texturée et une couche de substrat rigide ou en mousse comprenant les étapes consistant à :
A) appliquer une dispersion thermoplastique aqueuse sur une première surface d'un substrat rigide ou en mousse formant une structure composite avec une couche de peau, dans lequel la dispersion thermoplastique aqueuse est dérivée du mélange homogène à l'état fondu par extrusion
a) d'une composition thermoplastique en présence de
b) au moins un agent dispersant, et
c) d'eau ;
B) fournir un appareil de moulage comprenant un moule ayant une première moitié de moule ayant une surface texturée et une deuxième moitié de moule ayant une deuxième surface opposée à la première surface et pouvant être mise en prise avec ladite première moitié de moule de telle sorte que lorsque les moitiés de moule sont mises en prise, une cavité de moule entre elles est définie correspondant à la forme et à l'épaisseur d'une pièce ;
C) chauffer la structure composite ;
D) placer la structure composite chauffée entre les moitiés de moule ouvertes dans l'appareil de moulage de telle sorte que la couche de peau soit en contact avec la surface texturée de la première moitié de moule ;
E) fermer les moitiés de moule et mettre en contact la structure composite ;
F) former une pièce composite à substrat rigide ou en mousse ayant une couche de peau texturée ;
H) refroidir la pièce composite ;
I) ouvrir le moule ; et
J) retirer la pièce composite.

2. Le procédé de la revendication 1, dans lequel la dispersion appliquée à l'étape A) est laissée sécher avant l'étape C).

3. Le procédé de la revendication 1, dans lequel la dispersion appliquée à l'étape A) est laissée sécher durant l'étape C) et/ou l'étape D).

4. Le procédé de la revendication 1, dans lequel une ou les deux moitiés de moule sont chauffées avant l'étape D).

5. Le procédé de la revendication 1, dans lequel a) la composition thermoplastique comprend un ou plusieurs éléments parmi un copolymère séquencé d'oléfine, un copolymère d'oléfine aléatoire, un polyéthylène, un propylène, un propylène, l'éthylène, une α-oléfine, un copolymère à base de diènes non conjugués, un éthylène-acétate de vinyle, un éthylène-alcool vinylique, un polyéthylène chloré, une polyoléfine fonctionnalisée par un alcool, une polyoléfine à fonction amine, ou une polyoléfine greffée par un silane.

6. Le procédé de la revendication 1, dans lequel b) l'agent dispersant est l'éthylène-acide acrylique (EAA), l'éthylène-acide méthacrylique (EMA), un copolymère d'éthylène-acrylate d'éthyle (EEA), l'éthylène-méthacrylate de méthyle (EMMA), ou l'éthylène-acrylate de butyle (EBA).

7. Le procédé de la revendication 1, dans lequel la dispersion thermoplastique aqueuse est dérivée du mélange homogène à l'état fondu par extrusion a) d'un copolymère séquencé d'oléfine en présence (b) d'un éthylène-acide acrylique en tant qu'agent dispersant et c) d'eau.

8. Le procédé de la revendication 1, dans lequel la couche de substrat rigide ou en mousse comprend du polypropylène (PP), du polyéthylène (PE), d'autres polyoléfines (PO), une polyoléfine thermoplastique (TPO), des élastomères thermoplastiques (TPE), de l'acrylonitrile butadiène styrène (ABS), du polycarbonate (PC), du polycarbonate/acrylonitrile butadiène styrène/polycarbonate (PC/ABS), une résine époxy, du polychlorure de vinyle (PVC), du polyuréthane (PU), des élastomères d'uréthane thermoplastiques (TPU), un vulcanisat thermoplastique (TPV), du nylon, du polyester, ou des mélanges de ceux-ci.

9. Le procédé de la revendication 1, dans lequel la dispersion thermoplastique aqueuse est mélangée de manière homogène avec une dispersion aqueuse de polyuréthane (PU), acrylique, d'époxy, d'alkydes, phénolique ou de polyester afin de créer une dispersion hybride.

10. Le procédé de la revendication 1, dans lequel l'appareil de moulage est une machine de moulage par compression.

11. Le procédé de la revendication 1, dans lequel l'appareil de moulage est une machine de formage sous vide ou une machine de thermoformage.
